# EUROPÄISCHE PATENTSCHRIFT

(11) **EP 0 758 045 B1**
(45) Veröffentlichungstag und Bekanntmachung des Hinweises auf die Patenterteilung: **30.01.2002**
(21) Anmeldenummer: 96810482.8
(22) Anmeldetag: 23.07.1996
(51) Int. Cl.: F01K 23/16

(54) **Anfahrverfahren einer als Einwellenanlage ausgeführten Kombianlage**
Starting process for a single shaft combined power plant
Procédé de démarrage d'une centrale combinée à arbre unique

(30) Priorität: 08.08.1995 DE 19529110
(43) Veröffentlichungstag der Anmeldung: 12.02.1997
(73) Patentinhaber: Alstom, 75116 Paris (FR)
(72) Erfinder: Schmidli, Jürg, Dr., 5400 Baden (CH)
(74) Vertreter: Liebe, Rainer

(56) Entgegenhaltungen:
- WO-A-93/11351
- US-A- 5 042 246
- PATENT ABSTRACTS OF JAPAN vol. 13, no. 20 (M [785] , 18.Januar 1989 & JP-A-63 230912 (TOSHIBA), 27.September 1988,

## Beschreibung

### Technisches Gebiet

Die Erfindung betrifft ein Anfahrverfahren einer als Einwellenanlage mit einem gemeinsamen Wellenstrang ausgeführten Kombianlage, im wesentlichen bestehend aus einem Verdichter, einer Brennkammer, einer Turbine, einer Dampfturbine, einem Generator, sowie einem Brennstoffverdichter zum Verdichten von niederkalorischen Brennstoffen.

### Stand der Technik

Derartige Anfahrverfahren einer als Einwellenanlage mit einem gemeinsamen Wellenstrang ausgeführten Kombianlage sind bekannt.
Im Gegensatz zu Gasturbinen, welche mit herkömmlichen mittel- oder hochkalorischen Brennstoffen wie Erdgas oder Oel mit einem Heizwert von 40 MJ/kg oder mehr betrieben werden, benötigen Gasturbinen, welche einen niederkalorischen Brennstoff mit einem Heizwert in der Grössenordnung von 2 bis 4 MJ/kg verwenden, einen speziellen Brennstoffverdichter. Dieser Brennstoffverdichter benötigt eine beträchtliche Leistung zur Komprimierung der Brennstoffmenge.

Zum Anfahren der Gasturbine und der Dampfturbine werden deshalb spezielle Anfahrvorrichtungen verwendet, um die Turbinen auf Nenndrehzahl zu bringen.

JP A 63 230912 beschreibt eine Anordnung zum Anfahren einer Kombianlage unter Verzicht auf eine spezielle Anfahrvorrichtung zum Hochfahren der Turbinen, im wesentlichen bestehend aus Verdichter, Gasturbine, Generator, Dampfturbine und Brennstoffverdichter zum Verdichten niederkalorischen Brennstoffs auf einem gemeinsamen Wellenstrang sowie einem Abhitzekessel zur Dampferzeugung und einer Fremddampfeinspeisung, Zum Anfahren der Anlage wird die Dampfturbine verwendet. Sie wird mit Fremddampf gespeist und fährt über die gemeinsame Welle die beteiligten Aggregate hoch. Mit zunehmender Drehzahl fördert der Brennstoffverdichter Brennstoff für die Gasturbine.

Da Brennstoffverdichter leistungsoptimiert ausgelegt sind und demzufolge einer hohen Drehzahl bedürfen, um niederkalorischen Brennstoff in einer für den Betrieb der Gasturbine ausreichenden Menge der Brennkammer zuzuführen, muss diese hohe Drehzahl allein durch die fremddampfgespeiste Dampfturbine erzeugt werden. Aufgrund der geringen Wärmeemissionen des niederkalorischen Brennstoffs steht darüber hinaus der Abhitzekessel während des Anfahrvorgangs nicht zur Dampferzeugung zur Verfügung, so dass der gesamte Dampfbedarf aus der Fremddampfquelle gedeckt werden muss.

### Darstellung der Erfindung

Der Erfindung liegt die Aufgabe zugrunde, ein Anfahrverfahren einer als Einwellenanlage mit einem gemeinsamen Wellenstrang ausgeführten Kombianlage der eingangs genannten Art unter Verwendung einer mit Fremddampf gespeisten Dampf turbine bereitzustellen, das den Fremddampfbedarf erheblich reduziert.

Erfindungsgemäss wird dies dadurch erreicht, dass die Dampfturbine mittels in die Dampfturbine eingeleiteten Fremddampfes angefahren wird, dass die Gasturbine mittels der Dampfturbine angefahren wird, dass in der Brennkammer mittel- oder hochkalorischer Zusatzbrennstoff gezündet wird, dass der Wellenstrang auf Nenndrehzahl gefahren wird, dass die zur Verdichtung des niederkalorischen Brennstoffes im Brennstoffverdichter benötigte Leistung mittels des Zusatzbrennstoffes und des Fremddampfes aufgebracht wird und dass bei genügendem Druck im Brennstoffverdichter vom Zusatzbrennstoff auf den niederkalorischen Brennstoff umgeschaltet wird.

Da Oel- oder Erdgasflammen schon bei tiefen Lasten eine höhere Wärmeemission als eine niederkalorische Flamme aufweisen, ist es besonders zweckmässig, wenn die Abgase der Turbine in einem Abhitzekessel zur Produktion von Dampf verwendet werden, der entstehende Dampf zusätzlich zum Fremddampf in die Dampfturbine eingeleitet wird und die zur Verdichtung des niederkalorischen Brennstoffes im Brennstoffverdichter benötigte Leistung mittels des Zusatzbrennstoffes, des Fremddampfes und des im Abhitzekessel erzeugten Dampfes aufgebracht wird.

Dadurch kann Die Vorteile der Erfindung liegen insbesondere darin, dass der Bedarf an Fremddampf verringert werden kann. Gleichzeitig kann durch die Ausnutzung des Wärmepotentials des hochkalorischen Zusatzbrensstoffs im Abhitzekessel dessen Bedarf gering gehalten werden, was erhebliche Kosteneinsparungen für den Betreiber der Kombianlage ergibt. Die Brennkammer muss jetzt nur noch für den niederkalorischen Betrieb ausgelegt werden, wodurch auf eine Wassereinspritzung oder eine regelbare Luftverteilung in der Brennkammer verzichtet werden kann. Dadurch wird die Kombianlage vereinfacht und verbilligt. Ferner wird noch der Bedarf an Fremddampf reduziert.

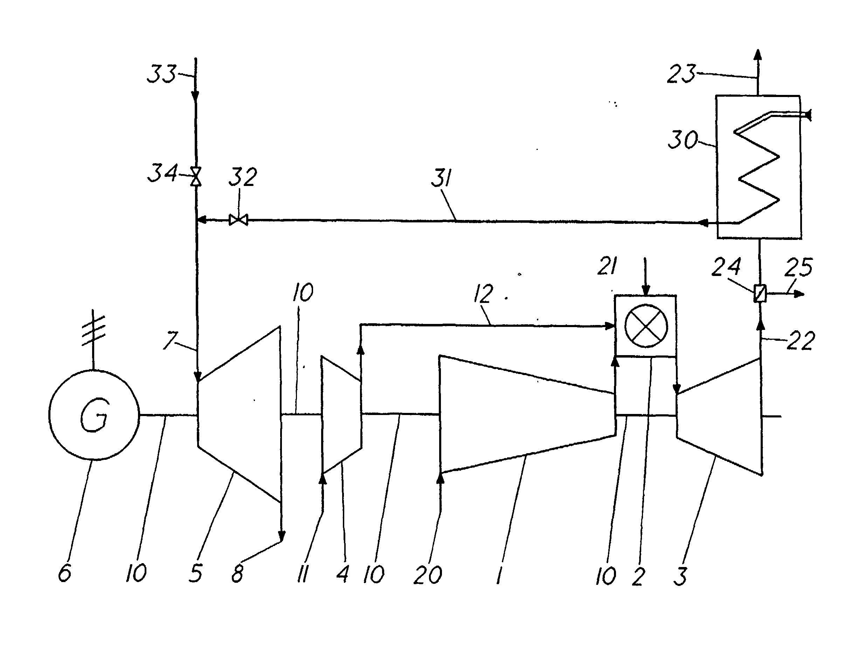

### Kurze Beschreibung der Zeichnung

In der Zeichnung ist ein Ausführungsbeispiel der Erfindung anhand einer schematischen Darstellung einer Kombianlage dargestellt.

Es sind nur die für das Verständnis der Erfindung wesentlichen Elemente gezeigt. Nicht dargestellt sind von der Anlage beispielsweise die Lagerungen der Wellen, der vollständige Wasser-Dampf-Kreislauf und der dem Generator zugeordnete Erreger.
Die Strömungsrichtungen der Arbeitsmittel sind mit Pfeilen bezeichnet.

### Weg zur Ausführung der Erfindung

Ein gemeinsamer Wellenstrang 10 verbindet eine Gasturbine, im wesentlichen bestehend aus Verdichter 1, Brennkammer 2 und eigentlicher Turbine 3, einen Brennstoffverdichter 4, eine Dampfturbine 5 und einen Generator 6. Der gemeinsame Wellenstrang 10 wird dabei von Einzelwellen gebildet, die über nicht näher dargestellte Kupplungen verbunden sind.

Im Verdichter 1 wird die über einen Lufteinlass 20 angesaugte Luft komprimiert und die verdichtete Luft in die Brennkammer 2 geleitet. Dort wird der Verbrennungsluft Brennstoff in der Form von Zusatzbrennstoff 21 oder von verdichtetem niederkalorischen Brennstoff 12 zugeführt und das Brennstoff-Luft-Gemisch in einem Brennraum verbrannt. Das entstandene Heissgas wird in die Turbine 3 geleitet, wo es entspannt wird und ein Teil der Energie des Heissgases in Drehenergie umgewandelt wird. Die noch heissen Abgase werden über eine Abgasleitung 22 einem Abhitzekessel 30 zugeführt. In der Abgasleitung 22 befindet sich ein Abgasventil 24, über das die Abgase zum Abhitzekessel 30 oder direkt in einen Abgaskamin 25 geleitet werden können. Im Abhitzekessel 30 wird dem Abgas Wärmeenergie entzogen und damit Wasser verdampft. Nach Abgabe der Wärmeenergie wird das Abgas über einen Kamin 23 ins Freie geleitet. Der entstandene Dampf wird über einen Dampfleitung 31 zu einem Dampfeinlass 7 der Dampfturbine geleitet und zum Betrieb der ein- oder mehrstufigen Dampfturbine 5 verwendet. Der beim Dampfauslass 8 austretende Dampf wird kondensiert und wieder dem Abhitzekessel 30 zugeführt. Ueber eine Fremddampfleitung 33 kann zusätzlicher Fremddampf in die Dampfturbine 5 eingeleitet werden. Die Dampfturbine 5 wird jeweils entsprechend dem Dampf aus dem Abhitzekessel 30 ausgelegt, da der Anteil des Fremddampfes üblicherweise um ein Mehrfaches geringer ist.

Da niederkalorische Brennstoffe in der Regel bei einem Prozess anfallen, bei welchem auch Dampf benötigt wird, beispielsweise der Stahlherstellung, kann auf eine spezielle Anfahrvorrichtung verzichtet werden. Die Dampfturbine 5 kann mittels des Fremddampfes zum Hochfahren der Kombianlage verwendet werden.

Da der Brennstoffverdichter 4 leistungsoptimiert ausgelegt ist, erbringt dieser in der Regel erst ab Nenndrehzahl den zur Eindüsung des niederkalorischen Brennstoffes benötigten Druck. Der Brennstoffverdichter 4 benötigt dazu eine gewisse, von der Grösse der Kombianlage abhängige Leistung (beispielsweise 40 MW), die nicht alleine von der Dampfturbine 5 mittels des Fremddampfes aufgebracht werden kann. Somit wird ein mittel- oder hochkalorischer Zusatzbrennstoff zum Hochfahren der Anlage benötigt, in der Regel Erdgas oder Oel.

Beim Anfahren einer Turbinenanlage wird diese jeweils über eine nicht dargestellte Wellendrehvorrichtung losgebrochen, mit Dampf vorgeheizt und auf eine bestimmte Drehzahl gebracht. Beim Anfahren sind natürlich die nicht dargestellten, verstellbaren Leitreihen der Verdichter 1, 4 geschlossen.

Bei einem ersten Anfahrbeispiel wird nun über die Fremddampfleitung 33 bei geöffnetem Ventil 34 Fremddampf in die Dampfturbine eingeleitet. Das Ventil 32 in der Dampfleitung 31 bleibt geschlossen. Bei genügender Leistung und Drehzahl des Wellenstranges 10 werden die Leitreihen des Luft-Verdichters 1 geöffnet und der in die Brennkammer eingedüste Zusatzbrennstoff 21 (Oel, Erdgas, usw.) gezündet. Die Gasturbine 3 kann nun zum weiteren Hochfahren der Kombianlage verwendet werden. Das Abgasventil 24 in der Abgasleitung 22 leitet die Abgase in den Abgaskamin 25. Nach Erreichen der Nenndrehzahl wird der Wellenstrang 10 synchronisiert und die Leistung der Turbine 3 erhöht. Wenn genügend überschüssige Leistung an der Welle 10 zur Verfügung steht, werden die verstellbaren Leitreihen des Brennstoffverdichters 4 geöffnet. Der Leistungsbedarf des Brennstoffverdichters 4 steigt an und bei genügendem Druck des Brennstoffverdichters wird auf den niederkalorischen Brennstoff 12 umgeschaltet. Bis im Brennstoffverdichter 4 ein genügender Druck vorherrscht, wird der niederkalorische Brennstoff über eine nichtdargestellte Rückführleitung und einen Kühler rezirkuliert. Je nach verwendeten Komponenten 5, 4, 1, 3 kann dieser Vorgang erst nach ungefähr 40 % Last der Gasturbine abgeschlossen sein. Der Anfahrvorgang ist damit abgeschlossen, das Abgasventil 24 wird umgeschaltet und im Abhitzekessel 30 Dampf produziert.

Die Brennkammer 2 muss bei diesem Anfahrverfahren auf die höhere Wärmeemission des Zusatzbrennstoffes 21 ausgelegt werden. Dazu wird Wasser in die Brennkammer 2 eingespritzt, was die Temperatur und Strahlung reduziert, oder eine regelbare Luftverteilung in die Brennkammer 2 eingebaut.

Bei einem zweiten Anfahrbeispiel wird in die vorgeheizte Dampfturbine 5 über die Fremddampfleitung 33 bei geöffnetem Ventil 34 Fremddampf eingeleitet. Das Ventil 32 in der Dampfleitung 31 bleibt vorerst geschlossen. Bei genügender Leistung und Drehzahl des Wellenstranges 10 werden die Leitreihen des Verdichters 1 geöffnet und der in die Brennkammer eingedüste Zusatzbrennstoff 21 gezündet. Die Turbine 3 kann nun zum weiteren Hochfahren der Kombianlage verwendet werden. Das Abgasventil 24 in der Abgasleitung 22 wird bei genügender Abgastemperatur (ca. 450 °C) der Turbine 3 umgestellt, so dass die Abgase in den Abhitzekessel 30 geleitet werden. Das Ventil 32 in der Dampfleitung 31 wird geöffnet und der im Abhitzekessel 30 produzierte Dampf an die Dampfturbine 5 abgegeben. Bei Nenndrehzahl wird der Wellenstrang 10 synchronisiert und die verstellbaren Leitreihen des Brennstoffverdichters 4 geöffnet. Die nun benötigte Leistung wird über den im Abhitzekessel 30 produzierten Dampf und den Fremddampf erbracht, so dass der Fremddampfanteil minimiert wird. Die Turbine 3 kann deshalb auf einem tiefen Leistungsniveau bei weniger als 10 % Leistung bleiben. Es wird maximal soviel Zusatzbrennstoff 21 in der Brennkammer 2 verbrannt, dass dort die Wärmebelastung nicht höherer als mit niederkalorischem Brennstoff 12 bei Vollast wird. Da die Turbine 3 nun weniger als 10 % Leistung bringen muss, sind der Zusatzbrennstoffverbrauch und auch der Druck in der Turbine geringer als im ersten Anfahrverfahren. Der Brennstoffverdichter 4 benötigt deshalb eine geringere Wellenleistung zum Umschalten auf niederkalorischen Brennstoff 12. Dadurch kann früher auf niederkalorischen Betrieb umgeschaltet werden, was den Verbrauch an Zusatzbrennstoff zusätzlich senkt und wodurch ein kleinerer Kühler in der Rückführleitung benötigt wird. Wegen den relativ tiefen Temperaturen in der Brennkammer 2 kann auf eine Wassereinspritzung oder eine regelbare Luftverteilung verzichtet werden.

Nachdem der Anfahr- und Umschaltvorgang abgeschlossen ist, wird der Fremddampf mittels des Ventils 34 abgeschaltet.

Selbstverständlich ist die Erfindung nicht auf die gezeigten und beschriebenen Ausführungsbeispiele beschränkt. Beim zweiten Beispiel kann auf das Abgasventil verzichtet werden, es wird dann üblicherweise eine Dampfumgehungsleitung vorgesehen. Die Ausgestaltung des Abhitzekessels ist nur schematisch dargestellt und kann beliebig ausgeführt werden.

### Bezugszeichenliste

- 1: Verdichter
- 2: Brennkammer
- 3: Turbine
- 4: Brennstoffverdichter
- 5: Dampfturbine
- 6: Generator
- 7: Dampfeinlass
- 8: Dampfauslass
- 10: Wellenstrang
- 11: Brennstoffeinlass
- 12: niederkalorischer Brennstoff
- 20: Lufteinlass
- 21: Zusatzbrennstoff
- 22: Abgasleitung
- 23: Kamin
- 24: Abgasventil
- 25: Abgaskamin
- 30: Abhitzekessel
- 31: Dampfleitung
- 32: Ventil
- 33: Fremddampfleitung
- 34: Ventil

## Patentansprüche

1. Anfahrverfahren einer als Einwellenanlage mit einem gemeinsamen Wellenstrang (10) ausgeführten Kombianlage, im wesentlichen bestehend aus einem Verdichter (1), einer Brennkammer (2), einer Turbine (3), einer Dampfturbine (5), einem Generator (6), sowie einem Brennstoffverdichter (4) zum Verdichten von niederkalorischen Brennstoffen (12), wobei die Dampfturbine (5) mittels in die Dampfturbine eingeleiteten Fremddampfes (33) angefahren und die Gasturbine (1, 2, 3) mittels der Dampfturbine (5) angefahren wird,
**dadurch gekennzeichnet, dass** in der Brennkammer (2) mittel- oder hochkalorischer Zusatzbrennstoff (21) gezündet wird, dass der Wellenstrang (10) auf Nenndrehzahl gefahren wird, dass die zur Verdichtung des niederkalorischen Brennstoffes (12) im Brennstoffverdichter (4) benötigte Leistung mittels des Zusatzbrennstoffes (21) und des Fremddampfes (33) aufgebracht wird und dass bei genügendem Druck im Brennstoffverdichter (4) vom Zusatzbrennstoff (21) auf den niederkalorischen Brennstoff (12) umgeschaltet wird.

2. Anfahrverfahren nach Anspruch 1,
**dadurch gekennzeichnet,**
**dass** die Abgase der Turbine (3) in einem Abhitzekessel (30) zur Produktion von Dampf verwendet werden, dass der entstehende Dampf (31) zusätzlich zum Fremddampf (33) in die Dampfturbine (5) eingeleitet wird und dass die zur Verdichtung des niederkalorischen Brennstoffes (12) im Brennstoffverdichter (4) benötigte Leistung mittels des Zusatzbrennstoffes (21), des Fremddampfes (33) und des im Abhitzekessel (30) erzeugten Dampfes aufgebracht wird.

3. Anfahrverfahren nach Anspruch 1,
**dadurch gekennzeichnet,**
**dass** maximal soviel Zusatzbrennstoff (21) in der Brennkammer (2) verbrannt wird, dass dort die Wärmebelastung nicht höher als mit niederkalorischem Brennstoff (12) bei Vollast wird.

## Claims

1. Method for starting up a combination plant designed as a single-shaft plant with a common shafting (10) and essentially consisting of a compressor (1), a combustion chamber (2), a turbine (3), a steam turbine (5), a generator (6) and a fuel compressor (4) for compressing low-calorie fuels (12), the steam turbine (5) being started up by means of extraneous steam (33) introduced into the steam turbine, and the gas turbine (1, 2, 3) being started up by means of the steam turbine (5), **characterized in that** medium-calorie or high-calorie auxiliary fuel (21) is ignited in the combustion chamber (2), **in that** the shafting (10) is run at nominal speed, **in that** the power required for compressing the low-calorie fuel (12) in the fuel compressor (4) is applied by means of the auxiliary fuel (21) and the extraneous steam (33), and **in that**, when there is sufficient pressure in the fuel compressor (4), a changeover is made from the auxiliary fuel (21) to the low-calorie fuel (12).

2. Startup method according to Claim 1, **characterized in that** the exhaust gases of the turbine (3) are used for the production steam in a waste heat boiler (30), **in that** the steam (31) occurring is introduced, in addition to the extraneous steam (33), into the steam turbine (5), and **in that** the power required for compressing the low-calorie fuel (12) in the fuel compressor (4) is applied by means of the auxiliary fuel (21), the extraneous steam (33) and the steam generated in the waste heat boiler (30).

3. Startup method according to Claim 1, **characterized in that** at most sufficient auxiliary fuel (21) is burnt in the combustion chamber (2) to ensure that the heat load there becomes no higher than with low-calorie fuel (12) under full load.

## Revendications

1. Procédé de démarrage d'une installation combinée configurée comme installation à arbre unique présentant un train d'arbre (10) commun, essentiellement constituée d'un compresseur (1), d'une chambre de combustion (2), d'une turbine (3), d'une turbine à vapeur (5), d'un générateur (6) ainsi que d'un compresseur de combustible (4) pour comprimer des combustibles (12) à faible pouvoir calorifique, la turbine à vapeur (5) étant démarrée au moyen de vapeur extérieure (33) introduite dans la turbine à vapeur et la turbine à gaz (1, 2, 3) étant démarrée au moyen de la turbine à vapeur (5), **caractérisé en ce qu'**un combustible supplémentaire (21) à pouvoir calorifique moyen ou élevé est allumé dans la chambre de combustion (2), **en ce que** le train d'arbre (10) est lancé à vitesse de rotation nominale, **en ce que** la puissance nécessaire pour la compression du combustible (12) à faible pouvoir calorifique dans le compresseur de combustible (4) est apportée au moyen du combustible supplémentaire (21) et de la vapeur extérieure (33), et **en ce que** lorsque la pression dans le compresseur de combustible (4) est suffisante, on passe du combustible supplémentaire (21) au combustible à faible pouvoir calorifique (12).

2. Procédé de démarrage selon la revendication 1, **caractérisé en ce que** les gaz d'échappement de la turbine (3) sont utilisés dans une chaudière de récupération (30) pour la production de vapeur, **en ce que** la vapeur (31) produite est introduite en plus de la vapeur extérieure (33) dans la turbine à vapeur (5), et **en ce que** la puissance nécessaire pour la compression du combustible (12) à faible pouvoir calorifique dans le compresseur de combustible (4) est apportée au moyen du combustible supplémentaire (21), de la vapeur extérieure (33) et de la vapeur créée dans la chaudière de récupération (30).

3. Procédé le démarrage selon la revendication 1, **caractérisé en ce que** l'on brûle dans la chambre de combustion (2) au maximum une quantité du combustible supplémentaire (21) telle que la charge thermique n'y soit pas supérieure à celle obtenue à pleine charge avec le combustible (12) à faible pouvoir calorifique.
